# EUROPEAN PATENT APPLICATION

(11) **EP 4 414 066 A1**
(43) Date of publication of application: **14.08.2024**
(21) Application number: 23825591.3
(22) Date of filing: 07.06.2023
(51) Int. Cl.: B01J 20/30, C03C 21/00, C03B 27/03, B01J 20/28, C22B 26/12

(54) **ION SIEVE WITH HIGH-TEMPERATURE RESISTANCE AND HIGH STABILITY, AND PREPARATION METHOD THEREFOR AND USE THEREOF**

(30) Priority: 23.12.2022 CN 202211665025
(71) Applicant: Chongqing Aureavia Hi-tech Glass Co., Ltd, Chongqing 400714 (CN)
(72) Inventor: HUANG, Hao, Chongqing 400714 (CN); TAN, Youhong, Chongqing 400714 (CN); ZHOU, Jingpeng, Chongqing 400714 (CN); CHEN, Ying, Chongqing 400714 (CN); XIANG, Wenhao, Chongqing 400714 (CN)
(74) Representative: Meroni, Francesca
(86) International application number: PCT/CN2023/098949
(87) International publication number: WO 2024/130975

(57) **Abstract**

The present disclosure relates to the technical field of ion sieves, in particular to the technical field of purification of salt bath for glass chemical strengthening, and specifically to a high-temperature-resistant and high-stability ion sieve and a preparation method and application thereof. Based on molar percentage of each oxide in the ion sieve, composition of the ion sieve includes: SiO₂: 46-60 mol%, Al₂O₃: 3-16 mol%, Y₂O₃: 0-3 mol%, and R₂O: 33-45 mol%, where R₂O is an alkali metal oxide; and the ion sieve satisfies: *S*_{*Q*³} / *S*_{*Q*²} is not lower than 1. The ion sieve in the present disclosure has excellent high-temperature resistance and high-temperature stability, and after being placed in the high-temperature salt bath for a relatively long time, the ion sieve substantially has no obvious crystal phase transformation, and has a stable structure, and it will not release a large amount of impurity substances to contaminate the salt bath, and will not cause appearance of obvious defects on the surface of the finished product of strengthened glass. The ion sieve of the present disclosure can constantly and stably absorb impurity ions in a 480 °C salt bath for 24 h.

## Description

### Cross-reference to Related Applications

The present disclosure claims priority to the Chinese patent application with the filing No. 202211665025.4, filed with the China National Intellectual Property Administration on December 23, 2022 and entitled "High-temperature-resistant and High-stability Ion Sieve and Preparation Method and Application thereof", the contents of which are incorporated herein by reference in entirety.

### Technical Field

The present disclosure relates to the technical field of ion sieves, in particular to the technical field of purification of salt bath for glass chemical strengthening, and specifically to a high-temperature-resistant and high-stability ion sieve and a preparation method and application thereof.

### Background Art

In the process of chemically strengthening of glass, alkali metal ions with a large ionic radius (such as K⁺ and Na⁺) in a salt bath replace alkali metal ions with a small ionic radius (such as Na⁺ and Li⁺) in the glass, then "crowding effect" is generated within a certain depth range, specific stress distribution is formed, and propagation of micro-cracks in the glass is hindered, thus, the purpose of improving glass strength is achieved, and meanwhile, the alkali metal ions with a small ionic radius continuously enter the salt bath from the glass, causing an increased content of alkali metal ions with a small ionic radius in the salt bath, and the increased alkali metal ions with a small ionic radius are also impurity ions in the salt bath. When the content of alkali metal ions with a small ionic radius (such as Li⁺) in the salt bath exceeds a certain limit, normal chemical strengthening will be seriously hindered from proceeding, then a stress level of the subsequent strengthened glass is decreased, and mechanical strength is greatly decreased, causing that performance of a final product does not meet use requirements. Moreover, an increased content of Li⁺ in the salt bath will seriously weaken a lithium-sodium exchange degree when chemically strengthening lithium-aluminum-silicon glass, thereby resulting in rapid decrease in an increase amount of dimension of the glass after being strengthened, failing to meet requirements for a deviation range of dimension of glass in cell phone cover plate application, and finally resulting in increase in dimension defect rate of the chemically strengthened glass.

With regard to the above situation, a solution of introducing an impurity ion removing material into the salt bath is proposed in the industry. The impurity ion removing material herein refers to a material for removing excessive alkali metal ions with a small ionic radius (such as Li⁺) in the salt bath, and controlling the content of alkali metal ions with a small ionic radius (such as Li⁺) in the salt bath within a limited range, to ensure normal use of the salt bath, and avoid too large content of alkali metal ions with a small ionic radius (such as Li⁺) in the salt bath, which will adversely affect the performance and quality of the strengthened glass.

The impurity ion removing materials commonly used by glass processing factories include phosphate, ion sieve, etc. The principle of phosphate removing impurity ions is that phosphate radicals react with the impurity ions to form precipitates, for example, powdered sodium phosphate is put into the salt bath, so that phosphate radicals and lithium ions form lithium phosphate to precipitate, thereby reducing the content of impurity Li⁺. However, the lithium phosphate will cause turbidity in the salt bath, which requires a long period of clarification before use, and moreover, some lithium phosphate particles are easily attached to surface of the strengthened glass, so that the glass is defective. That is to say, the use of phosphate as the impurity ion removing material has a limited improvement effect on the salt bath, and in order to ensure the performance and quality of the strengthened glass, the salt bath still needs to be constantly replaced within a short period of time, which is not only unfavorable for improving the efficiency of mass production, but also causes increase in strengthening costs. Meanwhile, when there is too much precipitated lithium phosphate at the bottom of the salt bath, not only an effective operating area of the salt bath is reduced, but also the difficulty in cleaning a strengthening furnace is increased.

In the glass processing factories, in order to ensure the efficiency of mass production, it is more desirable to continuously feed glass to be strengthened into a salt bath furnace, and perform strengthening to obtain chemically strengthened glass satisfying requirements. Meanwhile, it is also more desirable to shorten glass strengthening time by increasing a temperature of the salt bath. In order to achieve this purpose, there is a need for a solution capable of effectively controlling the content of impurity ions in the salt bath. If the impurity ion removing material cannot be used for a long time and needs to be frequently replaced, it will not only interrupt the strengthening process and affect the efficiency of mass production, but also will increase a use amount of the impurity ion removing material, and moreover, in the process of taking out the impurity ion removing material, a large amount of molten salt is easily carried out, then under the combined effect of the two, the strengthening costs are increased. Therefore, there is a need for an impurity ion removing material that can be stably used in a high-temperature salt bath for a long time, so as to reduce the use amount of molten salt, improve the production efficiency, and reduce the production costs.

After finding the defects existing in the use of phosphate as the impurity ion removing material, the applicant of the present disclosure developed an ion sieve material which can adsorb impurity ions in the salt bath. For example, the applicant's early patent application CN112645610A discloses a boron-free, phosphorus-free high-stability ion sieve and application thereof, which solves the problems that in a production process of a chemically strengthened glass cover plate, absorbing capacity is insufficient and absorption rate is poor for lithium in a salt bath ions under a high-temperature salt bath, and particularly for absorption of poisoned ion lithium. The applicant found that after adding the ion sieve self-developed by the applicant, the content of impurity ions in the salt bath was indeed well controlled, and a series of problems with the use of phosphate are also avoided. However, high-temperature resistance and high-temperature stability thereof are to be further improved.

### Summary

In order to overcome the defect existing in the related art that the high-temperature resistance and high-temperature stability of the impurity ion removing material are to be further improved, the present disclosure provides a high-temperature-resistant and high-stability ion sieve and a preparation method and application thereof. This ion sieve has excellent high-temperature resistance, can be stably used in a high-temperature salt bath for a long time, and has excellent high-temperature stability, for example, it can continuously absorb impurity lithium ions in a 480 °C salt bath for 24 h without frequent replacement, thus improving production efficiency of chemically strengthened glass, and reducing production costs of the chemically strengthened glass; and moreover, an application method is wide.

Through a lot of researches, the inventors of the present disclosure found that the reason why it is hard to further improve the high-temperature resistance and the high-temperature stability of the existing impurity ion removing material lies in that: after a common silicon-based ion sieve is used in a high-temperature salt bath for a long time, obvious crystal form transformation will occur, and the ion sieve material having undergone the crystal form transformation will be affected in the effect of absorbing lithium ions, even will re-release lithium ions into the salt bath. Moreover, the ion sieve material having undergone the crystal form transformation also will release a large amount of impurity substances into the salt bath to contaminate the salt bath, and further affect the quality of the strengthened glass, thus causing obvious defects to appear on a surface of a finished product of the strengthened glass, such as granular defects. Based on this, the inventors propose the present disclosure upon further researches. The present disclosure solves the problem that the silicon-based ion sieve cannot stably absorb lithium ions for a long time and release a large amount of impurity substances due to crystal form transformation occurring in the chemical strengthening treatment, thereby affecting the service lifetime and high-temperature stability of the salt bath.

In order to achieve the above objective, in a first aspect, the present disclosure provides a high-temperature-resistant and high-stability ion sieve.

In the present disclosure, based on molar percentage of each oxide in the ion sieve, composition of the ion sieve may include: SiO₂: 46-60 mol%, Al₂O₃: 3-16 mol%, Y₂O₃: 0-3 mol%, and R₂O: 33-45 mol%, where R₂O is an alkali metal oxide; and
the ion sieve satisfies: *S_{Q³}* / *S_{Q²}* is not lower than 1, where *S_{Q³}* is an area corresponding to Q³ after Gaussian deconvolution fitting is performed on a spectrum band within a range of 830-1230 cm⁻¹ in a Raman spectrum of the ion sieve, and Q³ is an Si-O⁻ stretching vibration peak in a silicon-oxygen tetrahedron with only one non-bridging oxygen; *S_{Q²}* is an area corresponding to Q² after Gaussian deconvolution fitting is performed on a spectrum band within the range of 830-1230 cm⁻¹ in the Raman spectrum of the ion sieve, and Q² is an Si-O⁻ stretching vibration peak in a silicon-oxygen tetrahedron with only two non-bridging oxygens.

In some optional embodiments, after the ion sieve is placed in a 480 °C salt bath for 24 h, a crystal content in the ion sieve is less than 10 wt%.

In some optional embodiments, 3≥*S*_{*Q*³} / *S*_{*Q*²} ≥1.

In some optional embodiments, the composition of the ion sieve may satisfy: 52.0≥0.85×SiO₂+0.15×Al₂O₃+1.65×Y₂O₃≥45.3 based on the molar percentage of each oxide in the ion sieve.

More optionally, the composition of the ion sieve further may satisfy: 20.0≥0.50×R₂O≥16.0 based on the molar percentage of each oxide in the ion sieve, where R₂O is Na₂O and/or K₂O, and further optionally, R₂O is Na₂O.

In some optional embodiments, in the ion sieve,
the molar percentage of SiO₂ is 49-60 mol%; and/or
the molar percentage of Al₂O₃ is 3-15 mol%; and/or
the molar percentage of Y₂O₃ is 1-3 mol%; and/or
the molar percentage of R₂O is 33-40 mol%.

In some optional embodiments, based on the molar percentage of each oxide in the ion sieve, the composition of the ion sieve further may include: ZnO: 0-3 mol%, CaO: 0-3 mol%, MgO: 0-3 mol%, P₂O₅: 0-3 mol%, B₂O₃: 0-3 mol%, where a sum of the molar percentages of ZnO+CaO+MgO+P₂O₅+B₂O₃ does not exceed 5 mol%.

Further optionally, the ion sieve is substantially free of P₂O₅ and/or B₂O₃.

Further optionally, the ion sieve is substantially free of Li₂O.

In some optional embodiments, based on a mass of the salt bath, the ion sieve in a mass proportion of 1 wt% is added to a 480 °C salt bath containing 105±10 ppm impurity lithium ions; and
a curve of change of lithium ion concentration y in the salt bath over time x satisfies the following function: y= A₁×exp(-x/b₁) + A₂×exp(-x/b₂)+C₀, where exp is an exponential function, and 100>A₁>30, 0<A₂<31, 0<b₁<5, 0<b₂<25, 0<C₀<50, and unit of x is h

In some optional embodiments, the ion sieve may be granular, sheet-shaped or porous, optionally granular, and optionally a granular ion sieve has a particle size of 1-10 mm.

In a second aspect, the present disclosure provides a method of preparing the ion sieve of the first aspect, and the method may include the following steps: taking various raw materials according to a formula and mixing the same uniformly, then performing melting at 1300-1650 °C, so as to obtain a liquid material; and then making the liquid material to be granular, sheet-shaped or porous.

In some optional embodiments, the granular ion sieve can be formed by water quenching, wherein a temperature of the water quenching is 10-80 °C.

In some optional embodiments, a sheet-shaped ion sieve can be made by rolling or drawing with an external force.

In some optional embodiments, a porous ion sieve can be made by feeding a blowing agent.

In a third aspect, the present disclosure provides a purification method of a salt bath for glass chemical strengthening, wherein the method may include the following steps: introducing the ion sieve of the first aspect into a to-be-purified salt bath at 350-550 °C, so as to perform an adsorption reaction of impurity ion.

In some optional embodiments, the usage amount of the ion sieve is 0.5-5.0 wt% of the to-be-purified salt bath.

In some optional embodiments, the duration of the adsorption reaction may be 0.1-48.0 h.

In some optional embodiments, impurity ion content in the to-be-purified salt bath may be 1-1000 ppm.

In a fourth aspect, the present disclosure provides a preparation method of a chemically strengthened glass, wherein the method may include: introducing a to-be-strengthened glass and the ion sieve of the first aspect into a salt bath for glass chemical strengthening that is free of impurity ions, and performing a chemically strengthening on the to-be-strengthened glass, so as to prepare the chemically strengthened glass.

It should be understood that what is realized by the preparation method herein is on-line purification of the ion sieve, which realizes that the ion sieve purification process is carried out at the same time as the glass strengthening process, without the need of suspending the strengthening process, or frequently replacing the salt bath, thus improving the production efficiency of the chemically strengthened glass and reducing the production costs of the chemically strengthened glass.

### Beneficial effects:

by means of in-depth researches on the ion sieve, it is found in the present disclosure that the ion sieve having specific composition and satisfying specific structural requirements has excellent high-temperature resistance and high-temperature stability, and after being placed in the high-temperature salt bath for a relatively long time, the ion sieve substantially has no obvious crystal phase transformation and has a stable structure, and it will not release a large amount of impurity substances to contaminate the salt bath, and will not cause appearance of obvious defects such as granular defects on the surface of a finished product of strengthened glass. The ion sieve of the present disclosure can constantly and stably absorb impurity ions in the 480 °C salt bath for 24 h, for example, stably absorb lithium ions which have relatively great adverse effect on the glass strengthening, and can ensure that surface quality of the finished product of the strengthened glass meets the requirements. If the structure of the ion sieve does not satisfy the specific structural requirements of the present disclosure, after being placed in a high-temperature salt bath for a long time, the ion sieve will have obvious crystal phase transformation, finally causing obvious decrease in the absorption capacity and absorption effect of the ion sieve for impurity ions; and even after being placed in the high-temperature salt bath for a longer time, the ion sieve will reversely precipitate impurity ions and other impurity substances to the salt bath, to contaminate the salt bath, thus causing obvious defects, such as granular defects, to appear on the surface of the finished product of strengthened glass.

### Brief Description of Drawings

In order to more clearly illustrate technical solutions of embodiments of the present disclosure, drawings which need to be used in the embodiments will be introduced briefly below, and it should be understood that the drawings below merely show some embodiments of the present disclosure, therefore, they should not be considered as limitation to the scope, and a person ordinarily skilled in the art still could obtain other relevant drawings according to these drawings, without using any inventive efforts.
FIG. 1a is an initial XRD pattern of ion sieves of Example 1-4;
FIG. 1b is an initial XRD pattern of ion sieves of Comparative Example 1-4.
FIG. 2a is an XRD pattern of the ion sieves of Examples 1-4 after absorbing lithium ions in a 480 °C test salt bath for 24 h;
FIG. 2b is an XRD pattern of the ion sieves of Comparative Examples 1-4 after absorbing lithium ions in a 480 °C test salt bath for 24 h.
FIG. 3a is a chart of changing trend of lithium ion concentration of the ion sieves of Examples 1-4 in a 480 °C test salt bath over time;
FIG. 3b is a chart of changing trend of lithium ion concentration of the ion sieves of Comparative Examples 1-4 in a 480 °C test salt bath over time;
FIG. 4 is a fitting result chart of the changing trend of the lithium ion concentration of Example 1 over time.
FIG. 5 is a fitting result chart of the changing trend of the lithium ion concentration of Example 2 over time.
FIG. 6 is a fitting result chart of the changing trend of the lithium ion concentration of Example 3 over time.
FIG. 7 is a fitting result chart of the changing trend of the lithium ion concentration of Example 4 over time.
FIG. 8 is a picture of a surface of a finished product of the strengthened glass obtained after the ion sieve of Example 1 directly participates in a chemical strengthening process.
FIG. 9 is a picture of a surface of a finished product of the strengthened glass obtained after the ion sieve of Comparative Example 1 directly participates in a chemical strengthening process.
FIG. 10 is a picture of a surface of a finished product of the strengthened glass obtained after the ion sieve of Comparative Example 2 directly participates in a chemical strengthening process.

### Detailed Description of Embodiments

Endpoints and any values of ranges disclosed herein are not limited to the precise ranges or values, and these ranges or values should be understood to contain values proximate to those ranges or values. For numerical ranges, one or more new numerical ranges can be obtained by combining endpoint values of various ranges, endpoint values and individual point values of various ranges, and individual point values with each other, and these numerical ranges should be considered as being specifically disclosed herein. The terms "optional" and "optionally" both mean possibly including or not (or possibly being present or possibly being not present).

Corresponding test methods involved in the present disclosure are as follows:

### 1. Ion sieve Raman spectrum test

An ion sieve is sieved and ground into fine powder, so as to make a particle size thereof less than 75 µm, and then the powder is tested using a laser Raman spectrometer to obtain a Raman spectrum.

Test conditions are as follows: a wave number range is 100-1500 cm⁻¹, and spectral resolution is 1-2 cm1.

The laser Raman spectrometer used in the present disclosure is manufactured by British company RENISHAW, with model number INVIA.

### 2. Ion sieve XRD spectrogram test

### (1) XRD spectrogram test of initial ion sieve

An initial ion sieve which has not participated in salt bath purification is sieved and ground into fine powder, so as to make a particle size thereof less than 75 µm, and then the powder is tested using an X-ray diffractometer to obtain an XRD diffraction peak curve, i.e., an XRD spectrogram.

Test conditions are as follows: an incident angle range is 2θ=10°-80°, a scan speed is 6°/min, a working voltage is 40 kV, and a working current is 30 mA.

### (2) XRD spectrogram test of the ion sieve having participated in the salt bath purification

The initial ion sieve is placed in a 480 °C test salt bath containing impurity lithium ions of below 1000 ppm, subjected to purification for 24 h and then taken out. The ion sieve taken out is sieved and ground into fine powder, so as to make a particle size thereof less than 75 µm, and then the powder is tested using an X-ray diffractometer to obtain an XRD diffraction peak curve, i.e., XRD spectrogram. The test salt bath used in the present disclosure is a sodium nitrate salt bath containing 105±10 ppm impurity lithium ions.

Test conditions are as follows: an incident angle range is 2θ=10°-80°, a scan speed is 6°/min, a working voltage is 40 kV, and a working current is 30 mA.

The X-ray diffractometer used in the present disclosure is Shimadzu XRD_6100.

### 3. Test of crystal content in the ion sieve

The crystal content in the ion sieve is measured by a proportion of peak area of crystal phase in the XRD spectrogram of the ion sieve having participated in the salt bath purification, i.e., the ratio of the peak area of the crystal phase fitted based on the XRD spectrogram to all the fitted peak areas is the crystal content.

In the present disclosure, the ion sieve having participated in the salt bath purification is tested using the X-ray diffractometer, and a test result file (RAW format) of the X-ray diffractometer is imported into X-ray diffraction data Rietveld refinement software (such as Jade, Gsas, Fullprof, and Maud) for fitting and calculation. In the present disclosure, the test result file (RAW format) of the X-ray diffractometer is imported into Jade for fitting and calculation, so as to obtain the crystal content in the ion sieve.

### 4. Test of lithium ion concentration (or referred to as content) in the salt bath

After the ion sieve is added to the to-be-purified salt bath, the concentration of lithium ions in the salt bath at different time is detected using an atomic absorption spectrophotometer, with time as a variable.

In a first aspect, the present disclosure provides a high-temperature-resistant and high-stability ion sieve, wherein based on molar percentage of each oxide in the ion sieve, composition of the ion sieve includes: SiO₂: 46-60 mol%, Al₂O₃: 3-16 mol%, Y₂O₃: 0-3 mol%, and R₂O: 33-45 mol%, where R₂O is an alkali metal oxide; and the ion sieve satisfies: *S_{Q³}* / *S*_{*Q*²} is not lower than 1, where *S*_{*Q*³} is an area corresponding to Q³ after Gaussian deconvolution fitting is performed on a spectrum band within a range of 830-1230 cm⁻¹ in a Raman spectrum of the ion sieve, and Q³ is an Si-O⁻ stretching vibration peak in a silicon-oxygen tetrahedron with only one non-bridging oxygen; *S*_{*Q*²} is an area corresponding to Q² after Gaussian deconvolution fitting is performed on the spectrum band within the range of 830-1230 cm⁻¹ in a Raman spectrum of the ion sieve, and Q² is an Si-O- stretching vibration peak in a silicon-oxygen tetrahedron with only two non-bridging oxygens. It can be understood that a unit of area *S*_{*Q*²} is the same as *S*_{*Q*³}.

In the above, working principles of oxides of various components are as follows.

SiO₂ is used for forming covalent bonds, and constituting a skeleton of an ion sieve network structure, and selection of composition and content thereof directly affects adsorption performance of the ion sieve network structure and thermal stability of the ion sieve in a high-temperature environment. A too low content of SiO₂ may lead to poor formability of the ion sieve, but excessive SiO₂ may lead to high viscosity of the composition, causing difficulty in melting. Therefore, in the present disclosure, the molar percentage of SiO₂ is 46-60 mol%. In some embodiments, the content of SiO₂ may be 46 mol%, 47 mol%, 48 mol%, 49 mol%, 50 mol%, 51 mol%, 52 mol%, 53 mol%, 54 mol%, 55 mol%, 56 mol%, 57 mol%, 58 mol%, 59 mol%, 60 mol% and etc., and all ranges and sub-ranges therebetween. It should be appreciated that in embodiments, any of the above ranges can be combined with any other range.

Al₂O₃ is a constituent part of network architecture, and meanwhile is beneficial to enhance absorption rate of the ion sieve for the impurity ions in the process of adsorbing impurity ions and improve anti-decomposition capability of the ion sieve at a high temperature, but excessive aluminum oxide will cause difficulty in forming of the ion sieve. Therefore, in the present disclosure, the molar percentage of Al₂O₃ is 3-16 mol%. In some embodiments, the content of Al₂O₃ may be 3 mol%, 4 mol%, 5 mol%, 6 mol%, 7 mol%, 8 mol%, 9 mol%, 10 mol%, 11 mol%, 12 mol%, 13 mol%, 14 mol%, 15 mol%, 16 mol% and etc., and all ranges and sub-ranges therebetween. It should be appreciated that in the embodiments, any of the above ranges can be combined with any other range.

An appropriate amount of Y₂O₃ can improve hardness and chemical stability of the ion sieve, but when the Y₂O₃ content is relatively high, the ion sieve has increased tendency of crystallization. Therefore, in the present disclosure, the molar percentage of Y₂O₃ is 0-3 mol%. In some embodiments, the content of Y₂O₃ may be 0, 0.5 mol%, 1 mol%, 1.5 mol%, 2 mol%, 2.5 mol%, 3mol% and etc., and all ranges and sub-ranges therebetween. It should be appreciated that in the embodiments, any of the above ranges can be combined with any other range.

The alkali metal oxide R₂O, on one hand, can provide alkali metal ions to participate in ion exchange, which is beneficial to ensure the absorption ability of the ion sieve to impurity ions, and on the other hand, can also provide free oxygen, which affects structural stability of the ion sieve. That is, the content of R₂O directly affects the ability of the ion sieve to adsorb the impurity ions and the stability of the ion sieve in a high-temperature salt bath. Therefore, in the present disclosure, the molar percentage of R₂O is 33-45 mol%. In some embodiments, the content of R₂O may be 33 mol%, 34 mol%, 35 mol%, 36 mol%, 37 mol%, 38 mol%, 39 mol%, 40 mol%, 41 mol%, 42 mol%, 43 mol%, 44 mol%, 45 mol% and etc., and all ranges and sub-ranges therebetween. It should be appreciated that in the embodiments, any of the above ranges can be combined with any other range.

In some optional embodiments, after the ion sieve is placed in a 480 °C salt bath for 24 h, the crystal content in the ion sieve is less than 10 wt%, wherein the crystal content is measured by a proportion of peak area of crystal phase in the XRD spectrum of the ion sieve.

In the present disclosure, the Gaussian deconvolution fitting refers to importing a laser Raman spectrometer test result file (.txt format) into Origin (e.g. version 2022 of Origin), selecting a spectrum band within a range of 830-1230 cm⁻¹, and performing deconvolution fitting and calculation using Gaussian function, so as to obtain areas corresponding to Q³ and Q², where a ratio of fitted Q³ area to fitted Q² area is *S*_{*Q*³} / *S*_{*Q*²}.

In some optional embodiments, 3≥S_{*Q*³} / *S*_{*Q*²} ≥1.

In some embodiments, a value of *S*_{*Q*³} / *S*_{*Q*²} may be 1.00, 1.05, 1.30, 1.50, 2.00, 2.30, 2.50, 2.80, 3.00 and etc., and all ranges and sub-ranges therebetween. It should be appreciated that in the embodiments, any of the above ranges can be combined with any other range. The inventors found through researches and verification that the ion sieve having a specific composition and satisfying specific structural requirements has excellent high-temperature resistance and high-temperature stability, and after being placed in the high-temperature salt bath for a relatively long time, the ion sieve substantially has no obvious crystal phase transformation, and has a stable structure.

In some optional embodiments, the composition of the ion sieve satisfies: 52.0≥0.85×SiO₂+0.15×Al₂O₃+1.65×Y₂O₃≥45.3, based on molar percentage of each oxide in the ion sieve. In this optional solution, the inventors of the present disclosure found through a lot of researches that oxides of key components affect high-temperature stability to different degrees, and when they meet the above condition, the ion sieve of a specific structure with *S*_{*Q*³} / *S*_{*Q*²} being not lower than 1 can be obtained, so that the structural stability of the ion sieve can be significantly improved, and meanwhile the melting and forming of the ion sieve are facilitated.

In some embodiments, a value of 0.85×SiO₂+0.15×Al₂O₃+1.65×Y₂O₃ may be 45.3, 46.0, 47.0, 48.0, 49.0, 50.0, 51.0, 51.5, 52.0 and etc., and all ranges and sub-ranges therebetween. It should be appreciated that in the embodiments, any of the above ranges can be combined with any other range.

In the above optional solutions, Y₂O₃ may or may not be contained. In cases where Y₂O₃ is contained, the effect of the Y₂O₃ contained on the structural stability of the ion sieve is much greater than that of SiO₂ and Al₂O₃, and controlling of the content of Y₂O₃ under the above condition is more beneficial to improve the high-temperature stability.

In the present disclosure, in cases where the above 52.0≥0.85×SiO₂+0.15×Al₂O₃+1.65×Y₂O₃×45.3 is satisfied, the ion sieve may further contain other components.

In some optional embodiments, the composition of the ion sieve satisfies: 20.0≥0.50×R₂O≥16.0, based on molar percentage of each oxide in the ion sieve, where R₂O is Na₂O and/or K₂O. The alkali metal oxide, on one hand, can provide alkali metal ions to participate in ion exchange, which is beneficial to ensure the absorption capacity of the ion sieve to impurity ions, and on the other hand, also will provide free oxygen, and affect the structural stability of the ion sieve. In the present disclosure, with 0.50×R₂O being 16.0-20.0, the structural stability of the ion sieve can be ensured while realizing that the ion sieve has an excellent adsorption capability. It should be understood that, when conventional glass is subjected to chemical strengthening, it is mainly Na ions and Li ions contained in the glass that are exchanged with K ions and Na ions in the salt bath. The impurity ions existing in the salt bath are mainly Li ions released from the glass into the salt bath. R₂O in the ion sieve is Na₂O and/or K₂O, which can better realize absorption and purification of the impurity ions in the salt bath.

More optionally, R₂O is Na₂O. It should be understood that when the glass is subjected to chemical strengthening, Na-Li exchange is performed, so that a compressive stress layer with a greater depth can be obtained, which is more beneficial to improve impact resistance of the glass. To accomplish this, Li ions in the glass are exchanged by Na ions in the salt bath and enter the salt bath to become impurity ions. Meanwhile, the inventors found through researches that too high concentration of impurity lithium ions in the salt bath will bring an extremely adverse effect on the glass strengthening. When R₂O in the ion sieve are all Na₂O, the absorption and purification of the lithium ions in the salt bath can be better realized.

More optionally, the molar percentage of SiO₂ in the ion sieve is 49-60 mol%.

More optionally, the molar percentage of Al₂O₃ in the ion sieve is 3-15 mol%.

More optionally, the molar percentage of Y₂O₃ in the ion sieve is 1-3 mol%.

More optionally, the molar percentage of R₂O in the ion sieve is 33-40 mol%.

The ion sieve of the present disclosure also may contain other metal oxides, and further optionally, based on the molar percentage of each oxide in the ion sieve, the composition of the ion sieve further includes: ZnO: 0-3 mol%, CaO: 0-3 mol%, MgO: 0-3 mol%, P₂O₅: 0-3 mol%, and B₂O₃: 0-3 mol%.

More optionally, the sum of the molar percentages of ZnO+CaO+MgO+P₂O₅+B₂O₃ does not exceed 5 mol%. In this optional solution, it is more beneficial to the high-temperature stability of the ion sieve, and reduction of an amount of crystal precipitation; and meanwhile, it is more beneficial to avoid weakening the absorption efficiency of the ion sieve.

In the present disclosure, P₂O₅ and B₂O₃ may be contained in the components of the ion sieve. However, when the contents of these components are excessive, the chemical durability of the ion sieve tends to deteriorate, and when they are used in a high-temperature salt bath, it is more likely to cause random erosion phenomenon to surfaces of glass and glass ceramic. Therefore, the ion sieve of the present disclosure is optionally substantially free of P₂O₅ and/or B₂O₃. Herein, "substantially free of" means that P₂O₅ and/or B₂O₃ are not actively added or proportioned into the ion sieve, but may be present in a quite small amount as contaminants or impurities.

In the present disclosure, the ion sieve is substantially free of Li₂O. If the ion sieve contains Li₂O, it is easy to bring about adverse influence to the effect of adsorbing the impurity lithium ions by the ion sieve.

In some optional embodiments, based on a mass of the salt bath, the ion sieve in a mass proportion of 1 wt% is added to a 480 °C salt bath containing 105±10 ppm impurity lithium ions; and
a curve of change of lithium ion concentration y in the salt bath over time x satisfies the following function: y= A₁×exp(-x/b₁) + A₂×exp(-x/b₂)+C₀, where exp is an exponential function, and 100>A₁>30, 0<A₂<31, 0<b₁<5, 0<b₂<25, 0<C₀<50, where unit of x is h This optional solution shows that the ion sieve of the present disclosure can continuously absorb the impurity lithium ions in a high-temperature salt bath for a long time, that is, the ion sieve of the present disclosure has excellent high-temperature stability and an excellent impurity ion absorption capacity.

It can be understood that, in the above function, a data relationship (mathematical model) is established with discrete data points of given y and x, and a series of tiny straight line segments are obtained to connect these interpolation points into a curve, so that a smooth curve can be formed. This curve can be represented by exp (exponential function), and A₁, A₂, b₁, b₂, and C₀ are all coefficients determined by the given discrete data points.

A person skilled in the art could select the shape and particle size of the ion sieve according to practical requirements.

In some optional embodiments, the ion sieve is granular, sheet-shaped or porous, optionally granular, and optionally a granular ion sieve has a particle size of 1-10 mm. In some embodiments, the particle size of the granular ion sieve may be 1 mm, 1.5 mm, 2 mm, 2.5 mm, 3 mm, 4 mm, 5 mm, 6 mm, 7 mm, 8 mm, 9 mm, 10 mm and etc., and all ranges and sub-ranges therebetween. More optionally, the particle size of the granular ion sieve is 2-5 mm. It should be appreciated that in the embodiments, any of the above ranges can be combined with any other range. The "particle size of the ion sieve" herein refers to the maximum diameter of the ion sieve particles.

In a second aspect, the present disclosure provides a preparation method of the ion sieve of the first aspect, including the following steps: taking various raw materials according to a formula and mixing the same uniformly, and melting at 1300-1650 °C, so as to obtain a liquid material; and then making the liquid material granular, sheet-shaped or porous.

In some optional embodiments, the melting lasts for more than 1 h, so as to ensure that various raw materials are melted sufficiently and mixed uniformly.

In the present disclosure, the granular ion sieve can be formed by water quenching, and optionally, a temperature of the water quenching is 10-80 °C. In some embodiments, the temperature of the water quenching may be 10 °C, 15 °C, 20 °C, 22 °C, 25 °C, 30 °C, 35 °C, 45 °C, 50 °C, 60 °C, 65 °C, 70 °C, 75 °C, 80 °C and etc., and all ranges and sub-ranges therebetween. It should be appreciated that in the embodiments, any of the above ranges can be combined with any other range. The size of the ion sieve particles can be controlled by controlling the temperature, so that the particle size of the ion sieve particles satisfies 1-10 mm.

In some optional embodiments, a sheet-shaped or porous ion sieve can be made according to use requirements. Exemplarily, the sheet-shaped ion sieve can be made by rolling or drawing with an external force. Optionally, the sheet-shaped ion sieve is of an irregular sheet shape, and the sheet-shaped ion sieve is controlled to have the shortest side of at least 0.3 cm, the largest side of less than 20 cm, and the thickness of 0.3-1.0 mm. Exemplarily, the porous ion sieve can be made by feeding a blowing agent, optionally, pores of the porous ion sieve are of a broken block shape, a pore diameter is 1-10 mm, and optionally, a porous ion sieve block has the shortest side of at least 0.5 cm, and the largest side of less than 10 cm.

The ion sieve of the present disclosure can be used for purifying a salt bath containing impurity ions, and can also directly participate in a process of chemical strengthening treatment, and adsorb/absorb lithium ions in the salt bath in the process of chemical strengthening treatment, with wide applications.

In a third aspect, the present disclosure provides a purification method of a salt bath for glass chemical strengthening, including the following steps: introducing the ion sieve of the first aspect into a to-be-purified salt bath, so as to perform an impurity ion adsorption reaction. A temperature of the to-be-purified salt bath can be chosen to be 350-550 °C, which is more conducive to giving full play to adsorption/absorption performance of the ion sieve to lithium ions. The impurity ions adsorbed/absorbed by the ion sieve are mainly lithium ions.

It should be understood that "impurity ions" herein refer to ions that are not actively introduced into the salt bath when the initial salt bath is formulated, such as lithium ions. The term "adsorption reaction" herein refers to that alkali metal ions with a large ionic radius in the ion sieve, such as K⁺ or Na⁺, may react with impurity alkali metal ions with a small ionic radius in the salt bath, such as Li⁺, so as to adsorb the impurity alkali metal ions in the salt bath into the ion sieve, thus realizing purification of the salt bath.

In the present disclosure, "purification of salt bath" may be on-line purification, and also may be purification of a salt bath subjected to the glass strengthening or a salt bath with excessive impurity ions. In the above, the on-line purification refers to that the ion sieve is directly introduced into the initial salt bath free of impurity ions, for example, the ion sieve can be loaded into a carrier (such as a metal mesh) and placed into the salt bath, so that the ion sieve purification process (absorbing impurity ions in the salt bath) is performed at the same as the glass strengthening process. Purification of salt bath subjected to glass strengthening or the salt bath with excessive impurity ions refers to introducing the ion sieve into the salt bath containing impurity ions, while the strengthening process is in progress or after the strengthening process is stopped, so as to perform adsorption treatment of the impurity ions.

In some optional embodiments, the usage amount of ion sieve is 0.5-5.0 wt% of the to-be-purified salt bath. The present disclosure can effectively purify the salt bath using a relatively low amount of ion sieve, and has excellent high-temperature resistance and high-temperature stability.

The to-be-purified salt bath in the present disclosure can be a pure potassium salt bath, a pure sodium salt bath or a mixed sodium and potassium salt bath (i.e., a mixed salt bath containing lithium (impurity ions), sodium, and potassium) containing a lot of impurity lithium ions, and a nitrate salt bath can be selected as the above salt bath.

The content of impurity lithium ions in the to-be-purified salt bath in the present disclosure can be selected in a relatively wide range, and can all be purified using the ion sieve in the present disclosure. For example, the content of impurity ions in the to-be-purified salt bath can be 1-1000 ppm.

In some optional embodiments, the reaction lasts for 0.1-48.0 h. The ion sieve of the present disclosure has an excellent capability of absorbing impurity ions, and can efficiently purify a salt bath containing impurity ions in a relatively short period of time. Meanwhile, the ion sieve of the present disclosure has excellent high-temperature stability, can still maintain a stable structure in a high-temperature salt bath, and is not prone to obvious crystal form transformation. Therefore, the ion sieve can stably absorb impurity ions in the 480 °C salt bath for 24 h, better realize the on-line purification, and avoid frequent replacement of the salt bath or the ion sieve material, which is more conducive to improving the mass production efficiency of the chemically strengthened glass and reducing the costs.

In a fourth aspect, the present disclosure provides a method of preparing chemically strengthened glass, including: introducing to-be-strengthened glass and the ion sieve of the first aspect into a salt bath for glass chemical strengthening that is free of impurity ions, and chemically strengthening the to-be-strengthened glass to prepare the chemically strengthened glass. It should be understood that what is realized by the preparation method herein is on-line purification of the ion sieve, wherein it is realized that the ion sieve purification process is carried out at the same time as the glass strengthening process, without the need of suspending the strengthening process, or frequently replacing the salt bath, thus improving the production efficiency of the chemically strengthened glass and reducing the production costs of the chemically strengthened glass.

In this preparation method, in the process of performing the chemical strengthening, the ion sieve of the present disclosure can constantly and stably absorb impurity ions generated in the ion exchange process in the salt bath, so that the impurity ions in the salt bath are always stable at a relatively low level, and the quality of the strengthened glass is ensured, moreover, the ion sieve substantially has no obvious crystal phase transformation and has a stable structure, and it will not release a large amount of impurity substances to contaminate the salt bath, thus avoiding appearance of obvious defects such as granular defect on a surface of a finished product of the strengthened glass.

The salt bath free of impurity ions refers to a brand new salt bath substantially free of impurity ions, i.e., an initial salt bath, and this salt bath has not been used for chemically strengthening the glass.

The present disclosure is further described in detail below in combination with specific examples.

### Example 1

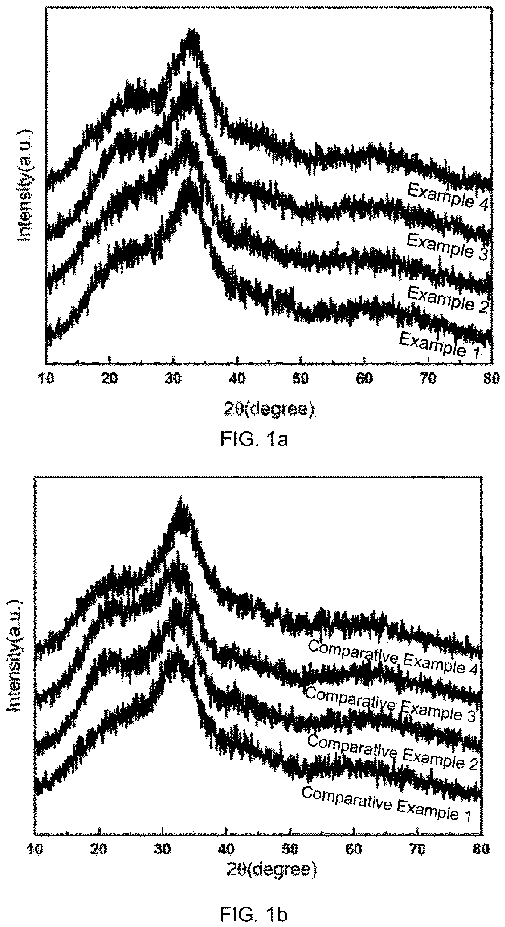

An ion sieve, *S*_{*Q*³} / *S*_{*Q*²} and oxide composition thereof are as shown in following Table 1, where *S*_{*Q*³} is an area corresponding to Q³ after Gaussian deconvolution fitting is performed on a spectrum band within a range of 830-1230 cm⁻¹ in a Raman spectrum of the ion sieve, Q³ is an Si-O- stretching vibration peak in a silicon-oxygen tetrahedron with only one non-bridging oxygen; *S*_{*Q*²} is an area corresponding to Q² after Gaussian deconvolution fitting is performed on a spectrum band in the range of 830-1230 cm⁻¹ in a Raman spectrum of the ion sieve, and Q² is an Si-O- stretching vibration peak in a silicon-oxygen tetrahedron with only two non-bridging oxygens. An initial XRD pattern of the ion sieve, i.e., the XRD pattern of the initial ion sieve having not been used for salt bath purification, is as shown in FIG. 1a.

A preparation method thereof is as follows: proportioning raw material components of the ion sieve according to the formula in Table 1, and mixing the same uniformly, then perform melting at 1500 °C for more than 1 h to form a liquid state, and forming a granular ion sieve with a particle size of 2-5 mm by water quenching, wherein a temperature of the water quenching was 25 °C.

### Examples 2-4

They were carried out with reference to Example 1, respectively, and differences lie in that formulas of the ion sieves are different, and *S*_{*Q*³} / *S*_{*Q*²} in the ion sieves is different, specifically realized by controlling contents of various oxides and content relationships between various oxides, specifically as shown in Table 1. An initial XRD pattern of the ion sieves thereof, i.e., an XRD pattern of initial ion sieves having not been used for salt bath purification, is as shown in FIG. 1a.

### Comparative Examples 1-4

They were carried out with reference to Example 1, respectively, and differences lie in that formulas of the ion sieves are different, and *S*_{*Q*³} / *S*_{*Q*²} in the ion sieves is different, specifically realized by controlling contents of various oxides and content relationships between various oxides, specifically as shown in Table 1. An initial XRD pattern of the ion sieves thereof, i.e., an XRD pattern of initial ion sieves having not been used for salt bath purification, is as shown in FIG. 1b.

### Application Example 1

The ion sieves prepared in the above examples and comparative examples were each placed in a 480 °C test salt bath containing 105±10 ppm lithium ions, and subjected to a lithium ion adsorption reaction. Each ion sieve was used in an amount of 1 wt% of weight of the test salt bath.

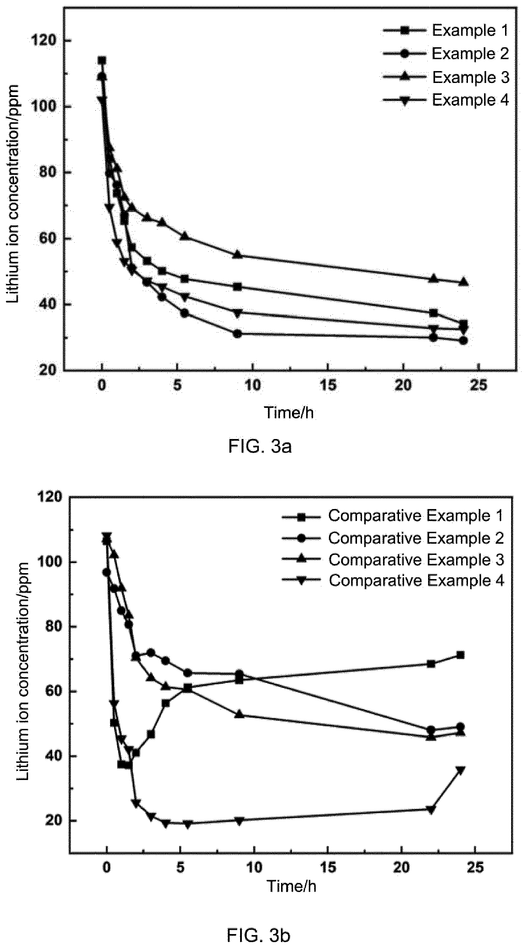

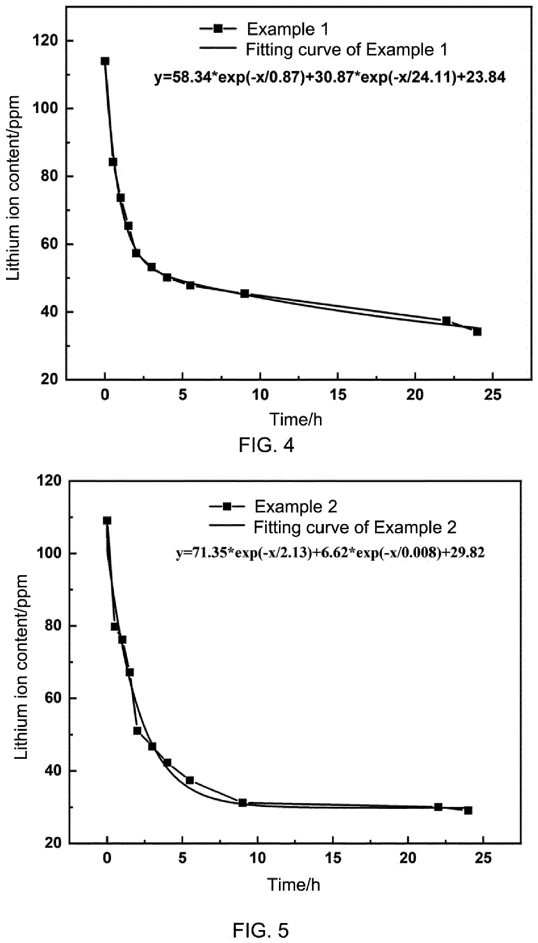

In the above test salt bath, change situation of the lithium ion concentration y over time x is as shown in the following Table 2 and FIG. 3a and FIG. 3b, in wherein fitting result charts of change curves of Examples 1-4 are as shown in FIG. 4, FIG. 5, FIG. 6, and FIG. 7.

After the ion sieve absorbed lithium ions in the test salt bath for 24 h, a crystal content in the obtained ion sieve is as shown in the following Table 1, wherein the crystal content is measured by a proportion of an area of peak area of crystal phase in an XRD spectrogram of the obtained ion sieve after 24 h of salt bath purification.

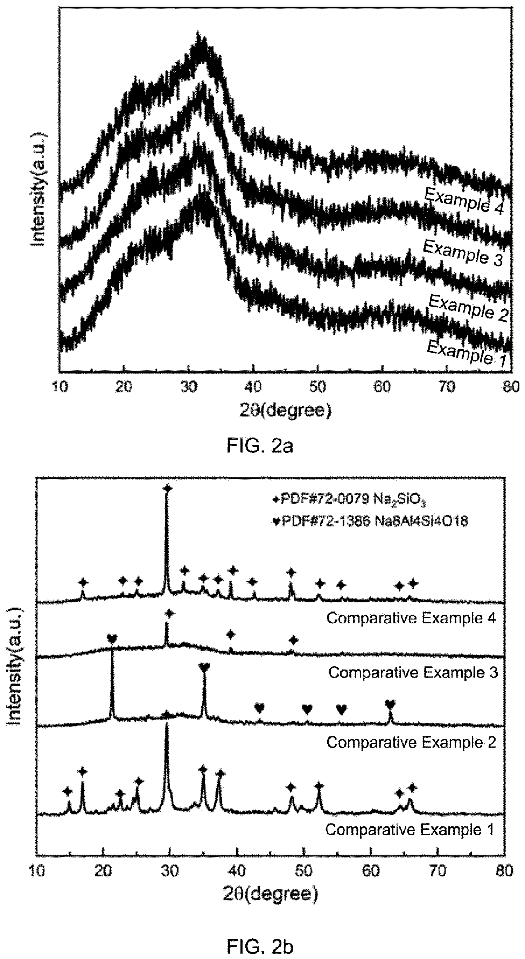

XRD patterns of the ion sieves obtained after 24 h of salt bath purification are as shown in FIG. 2a and FIG. 2b, respectively.

**Table 1**

| Composi tion of Ion Sieve (mol%) | Compar ative Exampl e 1 | Compar ative Exampl e2 | Compar ative Exampl e 3 | Compar ative Exampl e 4 | Examp le 1 | Examp le 2 | Examp le 3 | Examp le 4 |
|---|---|---|---|---|---|---|---|---|
| SiO₂ | 53 | 46 | 47 | 50 | 54 | 60 | 49 | 55 |
| Al₂O₃ | 1 | 15 | 15 | 4 | 7 | 3 | 15 | 3 |
| Na₂O | 44 | 37 | 35 | 43 | 38 | 37 | 33 | 39 |
| Y₂O₃ | / | / | / | 1 | 1 | / | 1 | / |
| ZnO | / | 1 | / | / | / | / | / | 2 |
| CaO | 2 | / | 2 | / | / | / | 2 | 1 |
| MgO | / | 1 | 1 | 2 | / | / | / | / |
| Total | 100 | 100 | 100 | 100 | 100 | 100 | 100 | 100 |
| 0.85×Si O₂+0.15 ×Al₂O₃+ 1.65×Y₂ O₃ | 45.2 | 41.35 | 42.2 | 44.75 | 48.6 | 51.45 | 45.55 | 47.2 |
| 0.50×Na ₂O | 22 | 18.5 | 17.5 | 21.5 | 19 | 18.5 | 16.5 | 19.5 |
| S_{Q3} | 1647.46 | 17153.1 5 | 22032.0 5 | 5234.86 | 32415. 69 | 32571. 43 | 21941. 95 | 30726. 36 |
| S_{Q2} | 43352.6 3 | 26116.6 6 | 27404.8 4 | 40268.1 4 | 11454. 31 | 11428. 57 | 20936. 10 | 13019. 64 |
| S_{Q3}/S_{Q2} | 0.04 | 0.66 | 0.80 | 0.13 | 2.83 | 2.85 | 1.05 | 2.36 |
| Crystal content /wt% in the ion sieve in 480 °C test salt bath, after 24 h of adsorpti on of Li⁺ | 78.51 | 32.13 | 13.16 | 53.64 | 4.15 | 3.97 | 8.76 | 6.32 |

**Table 2**

| Ion Sieve | Compar ative Exampl e 1 | Compar ative Exampl e 2 | Compar ative Exampl e 3 | Compar ative Exampl e 4 | Examp le 1 | Examp le 2 | Examp le 3 | Examp le 4 |
|---|---|---|---|---|---|---|---|---|
| Li+ content in initial test salt bath (ppm) | 106.48 | 96.80 | 107.12 | 108.28 | 113.96 | 109.08 | 108.92 | 102.00 |
| Li+ content in salt bath after 0.5 h (ppm) | 50.24 | 91.80 | 102.12 | 56.24 | 84.24 | 79.76 | 87.48 | 69.48 |
| Li+ content in salt bath after 1 h (ppm) | 37.45 | 84.92 | 91.88 | 45.400 | 73.68 | 76.20 | 81.16 | 58.92 |
| Li+ content in salt bath after 1.5 h (ppm) | 37.16 | 80.64 | 83.48 | 42.16 | 65.40 | 67.20 | 72.44 | 53.12 |
| Li+ content in salt bath after 2 h (ppm) | 41.12 | 71.08 | 70.44 | 25.56 | 57.36 | 51.08 | 69.2 | 50.44 |
| Li+ content in salt bath after 3 h (ppm) | 46.72 | 71.96 | 64.12 | 21.48 | 53.23 | 46.76 | 66.24 | 47.19 |
| Li+ content in salt bath after 4 h (ppm) | 56.36 | 69.52 | 61.36 | 19.36 | 50.16 | 42.28 | 64.80 | 45.40 |
| Li+ content in salt bath after 5.5 h (ppm) | 61.28 | 65.68 | 60.56 | 19.12 | 47.81 | 37.40 | 60.52 | 42.47 |
| Li+ content in salt bath after 9 h (ppm) | 63.48 | 65.4 | 52.68 | 20.16 | 45.4 | 31.20 | 54.96 | 37.64 |
| Li+ content in salt bath after 22 h (ppm) | 68.56 | 48.00 | 45.84 | 23.60 | 37.46 | 30.04 | 47.64 | 32.82 |
| Li+ content in salt bath after 24 h (ppm) | 71.28 | 49.00 | 47.16 | 35.84 | 34.2 | 29.12 | 46.68 | 32.53 |

It can be seen from Tables 1 and 2 that compared with the comparative examples, all the ion sieves in the examples of the present disclosure have the formula with *S*_{*Q*³} / *S*_{*Q*²} being greater than 1, and can adsorb the lithium ions constantly and stably for 24 h in the 480 °C test salt bath, and after the lithium ions are absorbed for 24 h, the crystal content in the ion sieve is less than 10 wt%. It is indicated that the ion sieve using the solutions of the examples of the present disclosure maintains a stable capability of absorbing the lithium ions in the high-temperature salt bath, and can maintain a stable structure in the high-temperature salt bath for a long time substantially, without incurring or incurring little crystal form change, so that it will not contaminate the high-temperature salt bath or shorten the lifetime of the salt bath due to the long-term introduction of the ion sieve.

It can be seen from FIG. 1a, FIG. 1b, FIG. 2a, and FIG. 2b that, after the ion sieve of the examples of the present disclosure continuously performs purification in the 480 °C salt bath for 24 h, the ion sieve has substantially no crystal form change, and the structure remains stable. However, after the ion sieves of the comparative examples continuously performs purification in the 480 °C salt bath for 24 h, an obvious crystal form change occurs, producing many crystals not contained in the initial ion sieves. This indicates that the ion sieve having the specific composition and specific structure in the present disclosure has excellent high-temperature stability, and can be placed in the high-temperature salt bath for performing impurity ion purification for a long time.

It can be seen from FIG. 3a and FIG. 3b and FIG. 4-7 that after the ion sieves of the examples are placed in the 480 °C test salt bath for performing lithium ion purification, the change of the lithium ion concentration y over time x in the salt bath satisfies the following function: y= A₁×exp(-x/b₁) + A₂×exp(-x/b₂)+C₀, and 100>A₁>30, 0<A₂<31, 0<b₁<5, 0<b₂<25, 0<C₀<50, exp being an exponential function. This indicates that the ion sieves having a specific composition and structure in the examples of the present disclosure can stably adsorb lithium ions in a high-temperature salt bath for a long time.

However, the ion sieves of the comparative examples do not satisfy the above function of the lithium ion concentration over time in the 480 °C salt bath. For example, a corresponding fitting function of Comparative Example 2 is y=29×exp(-x/1.52)-10.92×exp(x/22.00)+79.89. After the ion sieves of Comparative Example 1 and Comparative Example 4 perform the purification for less than 10 h, lithium ions are even reversely precipitated into the salt bath, so that the lithium ion concentration in the salt bath is increased, which indicates that the ion sieves in the comparative examples which do not satisfy the specific composition or the specific structure of the present disclosure cannot constantly and stably adsorb the lithium ions in the high-temperature salt bath for a long time, and even release the lithium ions into the salt bath due to structural change in the later stage.

### Application Example 2

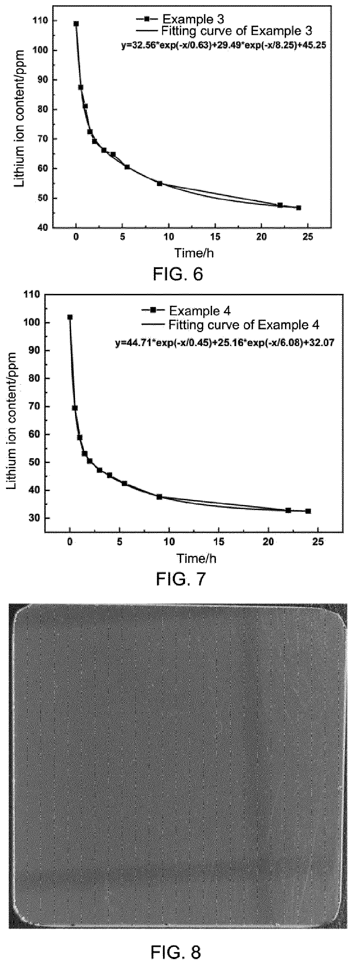

Taking Example 1, Comparative Example 1, and Comparative Example 2 as examples, respective ion sieve thereof and the to-be-strengthened lithium-aluminum-silicon glass were simultaneously placed in a brand new 460 °C sodium nitrate salt bath for successive batch strengthening, with strengthening time per batch being 8 h. After the strengthening of one batch of glass was completed, the strengthened glass was taken out of the salt bath together with the ion sieve, and then a new batch of the to-be-strengthened glass and a new ion sieve were added. The ion sieve added to the salt bath each time with the to-be-strengthened glass was in an amount of 1 wt% of the weight of the salt bath. When an eighth batch had been strengthened, pictures of finished products of glass respectively obtained from Example 1 and Comparative Examples 1 and 2 are as shown in FIG. 8, FIG. 9, and FIG. 10.

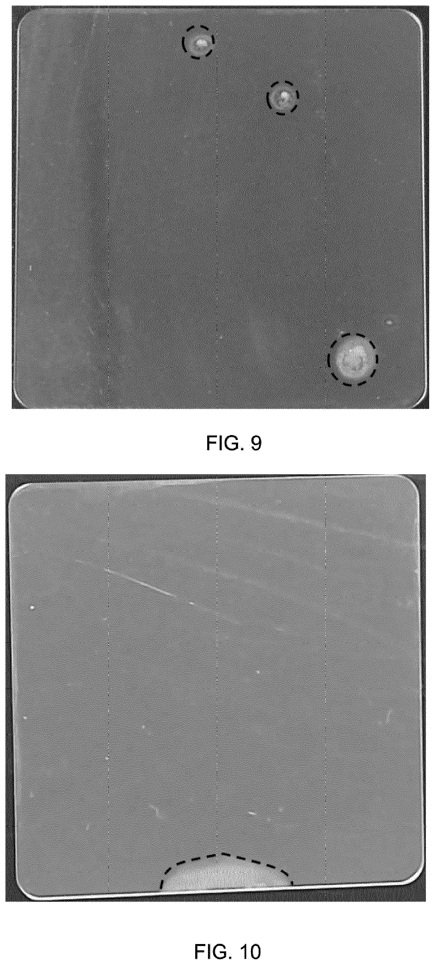

It can be seen from FIG. 8 that when the ion sieve of Example 1 of the present disclosure is used for salt bath purification, the surface of the glass obtained after the strengthening is smooth without defects. When the ion sieves in Comparative Examples 1 and 2 are used for salt bath purification, obvious granular defects appear on the surface of the glass obtained after the strengthening, as shown within dashed circles in FIG. 9 and 10.

The optional embodiments of the present disclosure are described in detail in the above, but the present disclosure is not limited thereto. Within the scope of technical concept of the present disclosure, various simple modifications can be made to the technical solutions of the present disclosure, including combination of various technical features in any other suitable manner, and these simple modifications and combinations should also be considered as contents disclosed in the present disclosure, and all belong to the scope of protection of the present disclosure.

### Industrial Applicability

The present disclosure belongs to the technical field of ion sieves, in particular to the technical field of purification of salt bath for glass chemical strengthening, and specifically to a high-temperature-resistant and high-stability ion sieve and a preparation method and application thereof. Based on the molar percentage of each oxide in the ion sieve, the composition of the ion sieve includes: SiO₂: 46-60 mol%, Al₂O₃: 3-16 mol%, Y₂O₃: 0-3 mol%, and R₂O: 33-45 mol%, where R₂O is an alkali metal oxide; and the ion sieve satisfies: *S*_{*Q*³} /*S*_{*Q*²} is not lower than 1. The ion sieve in the present disclosure has excellent high-temperature resistance and high-temperature stability, and after being placed in the high-temperature salt bath for a relatively long time, the ion sieve substantially has no obvious crystal phase transformation and has a stable structure, and it will not release a large amount of impurity substances to contaminate the salt bath, and will not cause appearance of obvious defects on the surface of the finished product of strengthened glass. The ion sieve of the present disclosure can constantly and stably absorb impurity ions in the 480 °C salt bath for 24 h.

Besides, it can be understood that the high-temperature-resistant and high-stability ion sieve and the preparation method and application thereof in the present disclosure can be reproduced, and can be used in a variety of industrial applications. For example, the high-temperature-resistant and high-stability ion sieve and the preparation method and application thereof in the present disclosure can be used in the technical field of ion sieves.

## Claims

1. A high-temperature-resistant and high-stability ion sieve, **characterized by** comprising, based on molar percentage of each oxide in the ion sieve, composition of: SiO₂: 46-60 mol%, Al₂O₃: 3-16 mol%, Y₂O₃: 0-3 mol%, and R₂O: 33-45 mol%, where R₂O is an alkali metal oxide; and
the ion sieve satisfies: *S*_{*Q*³} / *S*_{*Q*²} is not lower than 1, where *S*_{*Q*³} is an area corresponding to Q³ after Gaussian deconvolution fitting is performed on a spectrum band within a range of 830-1230 cm⁻¹ in a Raman spectrum of the ion sieve, and Q³ is an Si-O- stretching vibration peak in a silicon-oxygen tetrahedron with only one non-bridging oxygen; *S*_{*Q*²} is an area corresponding to Q² after Gaussian deconvolution fitting is performed on a spectrum band within the range of 830-1230 cm⁻¹ in the Raman spectrum of the ion sieve, and Q² is an Si-O- stretching vibration peak in a silicon-oxygen tetrahedron with only two non-bridging oxygens.

2. The ion sieve according to claim 1, wherein crystal content in the ion sieve is less than 10 wt% after the ion sieve is placed in a 480 °C salt bath for 24 h.

3. The ion sieve according to claim 1 or 2, wherein 3≥ *S*_{*Q*³} / *S*_{*Q*²} ≥1.

4. The ion sieve according to any one of claims 1 to 3, wherein the composition of the ion sieve satisfies: 52.0≥0.85×SiO₂+0.15×Al₂O₃+1.65×Y₂O₃≥45.3, based on the molar percentage of each oxide in the ion sieve.

5. The ion sieve according to claim 4, wherein the composition of the ion sieve further satisfies: 20.0≥0.50×R₂O≥16.0, based on the molar percentage of each oxide in the ion sieve, where R₂O is Na₂O and/or K₂O, and optionally, R₂O is Na₂O.

6. The ion sieve according to any one of claims 1 to 5, wherein in the ion sieve,
molar percentage of SiO₂ is 49-60 mol%; and/or
molar percentage of Al₂O₃ is 3-15 mol%; and/or
molar percentage of Y₂O₃ is 1-3 mol%; and/or
molar percentage of R₂O is 33-40 mol%.

7. The ion sieve according to any one of claims 1 to 6, further comprising, based on the molar percentage of each oxide in the ion sieve, the composition of: ZnO: 0-3 mol%, CaO: 0-3 mol%, MgO: 0-3 mol%, P₂O₅: 0-3 mol%, B₂O₃: 0-3 mol%, wherein a sum of the molar percentages of ZnO+CaO+MgO+P₂O₅+B₂O₃ does not exceed 5 mol%.

8. The ion sieve according to claim 7, wherein the ion sieve is substantially free of P₂O₅ and/or B₂O₃.

9. The ion sieve according to any one of claims 1 to 8, wherein based on a mass of the salt bath, the ion sieve in a mass proportion of 1 wt% is added to a 480 °C salt bath containing 105±10 ppm impurity lithium ions; and
a curve of change of lithium ion concentration y in the salt bath over time x satisfies a function of: y= A₁×exp(-x/b₁) + A₂×exp(-x/b₂)+C₀, where exp is an exponential function, and 100>A₁>30, 0<A₂<31, 0<b₁<5, 0<b₂<25, 0<C₀<50, and unit of x is h

10. The ion sieve according to any one of claims 1 to 9, wherein the ion sieve is granular, sheet-shaped or porous, optionally granular, and optionally a granular ion sieve has a particle size of 1-10 mm.

11. A method for preparing the ion sieve according to any one of claims 1 to 10, **characterized by** comprising steps of: taking various raw materials according to a formula and mixing the same uniformly, then performing melting at 1300-1650 °C, so as to obtain a liquid material; and then making the liquid material granular, sheet-shaped or porous.

12. The preparation method according to 11, wherein a granular ion sieve is formed by water quenching, wherein a temperature of the water quenching is 10-80 °C.

13. The preparation method according to 11, wherein a sheet-shaped ion sieve is made by rolling or drawing with an external force.

14. The preparation method according to 11, wherein a porous ion sieve is made by feeding a blowing agent.

15. A purification method of a salt bath for glass chemical strengthening, **characterized by** comprising steps of: introducing the ion sieve according to any one of claims 1 to 10 into a to-be-purified salt bath at 350-550 °C, so as to perform an adsorption reaction of impurity ion.

16. The purification method according to claim 15, wherein usage amount of the ion sieve is 0.5-5.0 wt% of the to-be-purified salt bath, and/or duration of the adsorption reaction is 0.1-48.0 h.

17. The purification method according to claim 16, wherein impurity ion content in the to-be-purified salt bath is 1-1000 ppm.

18. A preparation method of a chemically strengthened glass, **characterized by** comprising: introducing a to-be-strengthened glass and the ion sieve according to any one of claims 1 to 10 into a salt bath for glass chemical strengthening that is free of impurity ions, and performing a chemically strengthening on the to-be-strengthened glass.
